# EUROPEAN PATENT SPECIFICATION

(11) **EP 1 033 351 B1**
(45) Date of publication and mention of the grant of the patent: **02.06.2004**
(21) Application number: 00301688.8
(22) Date of filing: 02.03.2000
(51) Int. Cl.: C03C 19/00, G11B 5/84

(54) **Glass substrate for magnetic media and method of making the same**
Glassubstrat für magnetische Medien, und Verfahren zur Herstellung desselben
Substrat en verre pour support magnetique et méthode de sa fabrication

(30) Priority: 04.03.1999 US 262365
(43) Date of publication of application: 06.09.2000
(73) Proprietor: Asahi Glass Company, Limited, Chiyoda-ku, Tokyo 100-8405 (JP)
(72) Inventor: Bajorek, Christopher H., Los Gatos, CA 95032 (US); Tolle, Michael C., Menlo Park, CA 94025 (US)
(74) Representative: Müller-Boré & Partner Patentanwälte

(56) References cited:
- EP-A- 0 355 913
- DE-A- 3 528 386
- US-A- 5 268 071
- US-A- 5 871 654
- US-A- 5 872 069

## Description

### FIELD OF THE INVENTION

The present invention relates to hard disk drives used to store data, and more particularly to a glass substrate for disks incorporated in disk drives and a method of making the substrate.

### BACKGROUND OF INVENTION

In the field of hard disk storage systems, the substrates on which magnetic recording media are fabricated to form a hard disk have, for most disk drive applications traditionally been made of aluminum or an aluminum alloy. The aluminum is typically coated with a plated nickel alloy layer, such as nickel phosphorus (NiP) for hardness because aluminum is a relatively soft material.

Recently, there has been considerable effort to use glass substrates more extensively (herein, the term "glass" will be used to denote any glass containing or derived material including amorphous glass and glass ceramic). It is desirable to use glass as a substrate material because it is more resistant to deformation upon sudden head slap by the recording head than NiP plated aluminum. In fact, for this reason glass substrates are currently frequently used for laptop or notebook computers. In addition, glass substrates typically have fewer thermal asperities due to embedded particles than aluminum substrates. Glass also has greater stiffness than aluminum, which provides for lower flutter due to lower vibration, thereby allowing for a greater number of tracks per inch and hence greater density. The lower flutter also allows for greater rotational speeds during drive operation, providing a lower access time and greater data transfer rate.

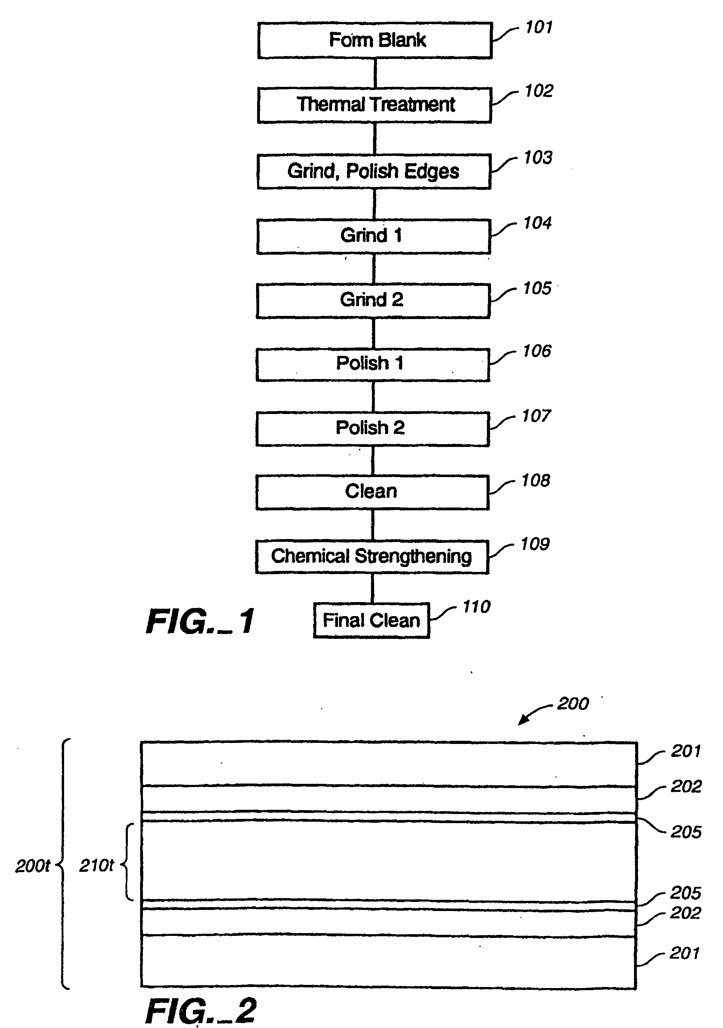

Glass substrates may be fabricated in a variety of ways. Figure 1 illustrates an exemplary process flow for forming glass substrates. First, in step 101, a glass blank is formed. In one method, the glass is cast or pressed to form the blank. In this method, molten glass is poured into a cylindrical mold. The molten glass is then pressed and cooled to solidify. Next, an inner diameter (ID) opening is formed in the center of the blank.

In another method, molten glass is drawn from a molten pool of glass through rollers, then cooled and cut to form sheets of glass. The sheet may then be diced into smaller square, rectangular or similarly shaped pieces. Each piece is then typically "cored" or cut into cylindrical blanks, having an ID opening, in one or more cutting processes. In the coring process both the outside diameter ("OD") and the ID are coarsely sized.

Finally, in a further blank forming process, molten glass may be floated on, e.g. molten tin, to form a thin layer of molten glass. The molten glass is then cooled to form a sheet. The sheet is processed in roughly the same manner as the drawn glass described above to form the blank.

A representative blank 200 is shown in Figure 2. The ID opening is not shown in Figure 2. The blank 200 has an initial, as formed thickness shown as 200t. Eventually, in the steps outlined below, a substrate 210 having a thickness 210t will be formed. Typically, about 20% to more than 50% of the thickness 200t of blank 200 will be removed to form substrate 210. While the terms "substrate" and "blank" may sometimes be used to refer to the workpiece at a certain point in manufacture, usage may vary. For example, the term "blank" may be used as early as when the material is first formed in a cylindrical shape, and thereafter used to describe the material at other stages, such as rough cut, chamfering, edge polish, etc. The term "substrate" may be used to refer to the workpiece as early as after the polishing step(s) described below, and thereafter may be used to describe the workpiece (including any layers or features formed in or on the workpiece) at any point during the manufacture of the magnetic recording media. It will be appreciated that use of the terms "blank" or "substrate" herein will usually refer to the workpiece as it exists at the point under discussion, depending upon the context. However, use of either term in no way limits the workpiece or the scope of the invention to any specific point in the sequence or to any state of the workpiece as many different process steps can be carried out in a different order than described herein, may be not be used in every circumstance, or may be replaced with different and/or additional process steps.

After forming a blank, the glass may undergo thermal treatment in step 102. The thermal treatment anneals out stress and can assist in flattening the blank. Then, step 103 comprises a grinding operation wherein the OD and ID edges are ground to precisely size the ID and OD, and to provide a chamfer. Because the disk is considerably thicker than the final substrate, the grinding operation must be designed such that the desired chamfer will be present in the finished substrate. After the grinding operation, the edges may be polished, if necessary, to a smoothness sufficient to allow handling with robotics, holding in clamps and like operations, without damage to either the disk or such equipment and without generation of debris.

The edge polish may be followed by some combination of grinding, lapping and polishing steps. Although usage of these terms vary, grinding typically refers to a primarily physical process where the blank is pressed against a grinding stone, or a plate with embedded particles such as diamond particles, in the presence of a lubricant or coolant. Grinding is a relatively aggressive step in that a large amount of material is removed quickly. In this step, large defects and large scale (i.e. long wavelength) surface level variations are removed or greatly reduced. However, smaller defects and smaller scale surface level variations remain.

Polishing and lapping normally refer to steps that are both chemical and physical, but for glass substrates are usually primarily cheanical. In these steps, the blank is placed between two cloth polishing pads that contain a slurry having an etchant (such as cerium oxide) and an abrasive. These steps are carried out using successively less aggressive processing (successively smaller sized abrasives and/or less aggressive chemistries and/or lower pad pressure). In this way, progressively smaller defects and surface level variations are removed, resulting in a very smooth, low defect level surface. Although lapping and polishing can use the same type of equipment and slurries, the term lapping is typically used for a more aggressive process. In fact, in some cases no grinding is performed and a large amount of material is instead removed by one or more lapping steps. In contrast, the polishing steps typically remove a minor amount of material, and are primarily performed to cause the surface to be free of small defects and impurities, and to form a very smooth surface.

In the exemplary prior art process of Figure 1 after step 103, a first grinding process 104 is performed, followed by a second grinding process 105. Returning to Figure 2, portions 201 and 202 are removed from both sides of blank 200 by grinding processes 104 and 105 respectively. It will be appreciated that the figures herein while illustrative, are not necessarily drawn to scale. As can be seen, these two grinding processes have removed the bulk of the total material to be removed. As mentioned earlier, one or both of the grinding steps may be replaced with one or more aggressive lapping steps. In any event, approximately 80% to 95% or more of the total thickness to be removed is removed in the grinding and/or lapping steps prior to polishing.

Returning to Figure 1, following the grinding steps a polish 1 step 106 is performed followed by a polish 2 step 107. As with the grinding and/or lapping steps, the polish steps are performed such that each step is successively less aggressive and removes a smaller amount of material. In Figure 2, the portion 205 removed from both sides of substrate 200 by both polishing steps 106 and 107 is shown. The polishing steps combined remove the remaining material to be removed to form a substrate 210 - i.e., approximately 5 - 20% of the total material to be removed, which is typically an amount equal to about 1 - 10% of the total thickness 200t. Of the total amount 205 removed in the polishing steps, most (e.g. approximately 85%) is removed in the polish 1 step 106 in standard glass substrate manufacturing processes. Stated alternatively, typically about 1 - 10% of the total thickness 200t may be removed in the polish 1 step 106, while about 0.1 - 1% of the total thickness 200t may be removed in the polish 2 step 107. Of course, the actual amount removed in each grinding, lapping or polishing step may vary from the foregoing in different processes.

After the final polishing step 107, the blank is cleaned in step 108 and then in the case of amorphous glass chemically strengthened in step 109. In step 109, one or more chemicals such as sodium nitride and potassium nitride are implanted in the surface of the substrate by immersion in a high temperature solution to cause the surface layer to be in compressive stress, preventing cracks from propagating. Finally, the disk is once again cleaned in step 110.

Many different variations of the exemplary process of Figure 1 may be used, including the addition of grinding or lapping steps or replacement of one or more grinding steps with lapping steps. In that regard, a large amount of material is typically removed in one or more grinding and/or lapping steps, while a relatively small amount of material is removed in one or more polishing steps to form a smooth finish and remove small scale surface level variations and other irregularities. If desired, there may be one or more cleaning steps between successive polishing or successive grinding/lapping steps in addition to those shown, while one or more of the clean steps shown may not be performed.

Additionally, other steps may be omitted or performed at different stages of the process. As one example, the grinding and polish of the edges in step 103 may be performed at a different point in the process, although it is typically desired to perform these operations before the polish steps so that they do not damage the polished surfaces of the disk. Additionally, these operations need not be carried out in sequence and each may be placed at a different point in the process.

One significant disadvantage to glass substrates is the increased cost as compared with aluminum substrates. Of the total cost to produce a substrate, the grinding, lapping, and polishing steps usually comprise two thirds of the cost or more. Often, this cost is roughly equally split between the grinding/lapping and polishing steps, but of course may vary depending upon the extent each is performed.

What is needed is a process for forming a glass substrate that is economical, while resulting in a smooth surface, free of asperities, scratches, embedded particles or other defects and free of contaminants. or more cleaning steps between successive polishing or successive grinding/ lapping steps in addition to those shown, while one or more of the clean steps shown may not be performed.

Additionally, other steps may be omitted or performed at different stages of the process. As one example, the grinding and polish of the edges in step 103 may be performed at a different point in the process, although it is typically desired to perform these operations before the polish steps so that they do not damage the polished surfaces of the disk. Additionally, these operations need not be carried out in sequence and each may be placed at a different point in the process.

One significant disadvantage to glass substrates is the increased cost as compared with aluminum substrates. Of the total cost to produce a substrate, the grinding, lapping, and polishing steps usually comprise two thirds of the cost or more. Often, this cost is roughly equally split between the grinding/lapping and polishing steps, but of course may vary depending upon the extent each is performed.

US-A-5 268 071 discloses a process of producing a magnetic disc substrate comprising etching the surface of a glass substrate to form minute irregularities on the surface thereof, by employing molten salt containing at least a kind of nitrite of cation. According to this document such process can prevent the deterioration of the mechanical and magnetic properties of the magnetic disc glass substrate for a long time period. In particular, US-A-5 268 071 refers to soda lime glass.

US-A-5 872 069 discloses a novel series of glass ceramics for magnetic disc substrate use, which can prevent deformation of the substrate at a large temperature changes and provide a strong, small and compact magnetic disc substrate.

The object of the present invention is to provide a process for forming a glass substrate that is economical, while resulting in a smooth surface, free of aspherities, scratches, embedded particles or other defects and free of contaminants.

### SUMMARY OF THE INVENTION

According to the present invention there is provided a method for making a magnetic recording disk comprising:
floating molten glass on a molten material;
solidifying said molten glass to form a glass sheet;
forming at least one blank from said glass sheet, said blank having a thickness, wherein said step of forming at least one blank comprises sectioning a portion of said sheet of glass and coring the sectioned piece;
performing one or more operations to form a substrate, wherein a total of 10% or less of said thickness of said blank is removed while performing said one or more operations to form said substrate and wherein the one or more operations comprise fine polishing the substrate; and
depositing a magnetic layer above said substrate.

The method of making a will be described. First, molten glass is floated on a molten material. The glass is solidified into a sheet which is be sectioned and cored to form a cylindrical glass blank having an inner diameter hole. No more than about 10% of the total thickness of the blank is removed in polishing or lapping or grinding operations. Preferably even smaller amounts of material are removed, in one example about 5% or less, in another example about 2-5% or less and in a further example about 1% or less. Finally, in some embodiments no grinding, polishing or lapping steps are performed.

Other operations such as sizing, chamfering, and polishing of the edges may be performed. In a preferred embodiment the method comprises the steps of chamfering one or both of an outside diameter edge of said blank and an insider diameter edge of said blank, and polishing one or both of said outer diameter edge and said inside diameter edge of said blank. One or more operations, eg polishing may be performed to the extent necessary to adjust the surface characteristics of said blank and not to remove bulk material from said blank, for example to achieve: removal of embedded particles; removal of asperities; removal of scratches; removal of chemical contaminants on or near the surface; lowering the roughness of said surface; and any combination of the foregoing. The Ra roughness of the surface may by 0.20 nm (2 Å) or less after such operation or operations which remove no more than 10% of said thickness of said blank.

One or preferably more magnetic layers are deposited on the substrate to form a magnetic recording disk.

A magnetic recording disk is formed by the method of the invention. Such a magnetic recording disk may be contained in a removable cartridge.

The thickness of the glass substrate is 90% or more of said blank thickness. In addition, various cleaning steps may be used throughout the process.

Additional embodiments and other features and advantages of the present invention will become apparent from the detailed description, figures and claims which follow.

### BRIEF DESCRIPTION OF THE DRAWINGS

Figure 1 shows a block diagram of an exemplary prior art process.
Figure 2 illustrates the material removed from a blank to form a substrate in the prior art process sbown in Figure 1.
Figure 3 illustrates SIMS analysis of a glass blank formed according to the present invention.
Figures 4A-4C show block diagrams of embodiments of the present invention.
Figure 5 illustrates the material removed from a blank to form a substrate according to one of the embodiments of Figure 4.

### DETAILED DESCRIPTION

Methods of making a substrate, magnetic recording media, and storage devices, as well as the substrate, media and storage devices, are disclosed. In the following description, numerous specific details are set forth such as specific dimensions, materials, operating parameters, processes, physical characteristics, etc. It will be appreciated, however, that these specific details need not be employed to practice the present invention. In other instances, well known methods and apparatuses are not described in detail in order not to obscure unnecessarily the present invention.

Advanced media requires an extremely smooth surface. Generally, the roughness or variation in surface level may vary from small scale variation over distances such as a few nanometers, up to large scale variations over a distance of up to several millimeters. In general, such variations are classified in terms of the wavelength of the variation. Roughness measurements will depend not only upon the wavelength bandwidth selected but also upon the definition of roughness. For example, two well known measures of roughness include the arithmetic average of the distance of the peaks and valleys above and below, respectively, the average surface level (Ra roughness), and the root means square average of such variations (RMS roughness). In addition, the roughness value will depend upon the particular type of system used to measure roughness as well as the various parameters that may be used in operating the system and the particular method by which the system calculates roughness.

Although terminology may vary greatly, and although both Ra and RMS calculations may be performed for roughness in any wavelength range, the term "Ra roughness" by itself as used in the disk drive industry typically refers to roughness measured in the wavelength range of approximately under 0.1 micron (µm) - 10 µm. RMS roughness may typically be measured at a slightly greater wavelength range such as approximately below 1 µm - 50 µm. On the other end of the scale, the term flatness is often used to refer to surface level variations having a wavelength on the order of several hundred microns to several tens of millimeters. In between, other ranges of wavelength may be examined such as, for example, as "low frequency" roughness which is used to denote Ra roughness measured at greater wavelength (e.g. tens to hundreds of microns) than that used when Ra roughness is specified.

In state of the art devices using a polished nickel phosphorous layer the Ra roughness as measured by atomic force microscope (AFM) is on the order of approximately 2.5 Angstroms (Å) (0.25 nanometers (nm)) or less. The low frequency roughness, as measured by a Zygo New View system using a high pass FFT-type fixed filter, with a wavelength of 250 µm and a 300 x 240 pixel scan size is typically approximately 6 Å (0.6 nms) or less. Finally, the flatness as measured on a Phaseshift Optiflat using a flyable radius between 14 mm and 47 mm is typically in the range of approximately 4 µm or less.

As mentioned in the Background section, glass blanks are formed to a much greater thickness than the ultimate substrate, to allow for extensive grinding, lapping and polishing to ensure that the various surface characteristics described above are acceptable for advanced devices. For example, to form a substrate having a thickness of 1 mm, the blank may be formed having a thickness of approximately 1.2 mm - 2 mm or greater, so that a couple hundred to one thousand or more microns of material is removed. In addition, with respect to floated glass it is further believed that extensive material must be removed to ensure no contamination from the material (e.g. tin) that the glass is floated on.

In contrast to the prior art understanding, it has been discovered that as-floated glass has excellent surface characteristics. For example, in one sample the Ra roughness measured by AFM was found to be approximately 1.3 Å (0.13 nm). The low frequency roughness as measured on a Zygo New View using the previously described recipe was approximately 4 Å (0.4 nm). Finally, the flatness, as measured by a Phaseshift Optiflat using the above-described flyable radius was approximately 6 µm. Thus, the result of this investigation shows that, contrary to the common understanding, the surface quality of the as-floated material is extremely good.

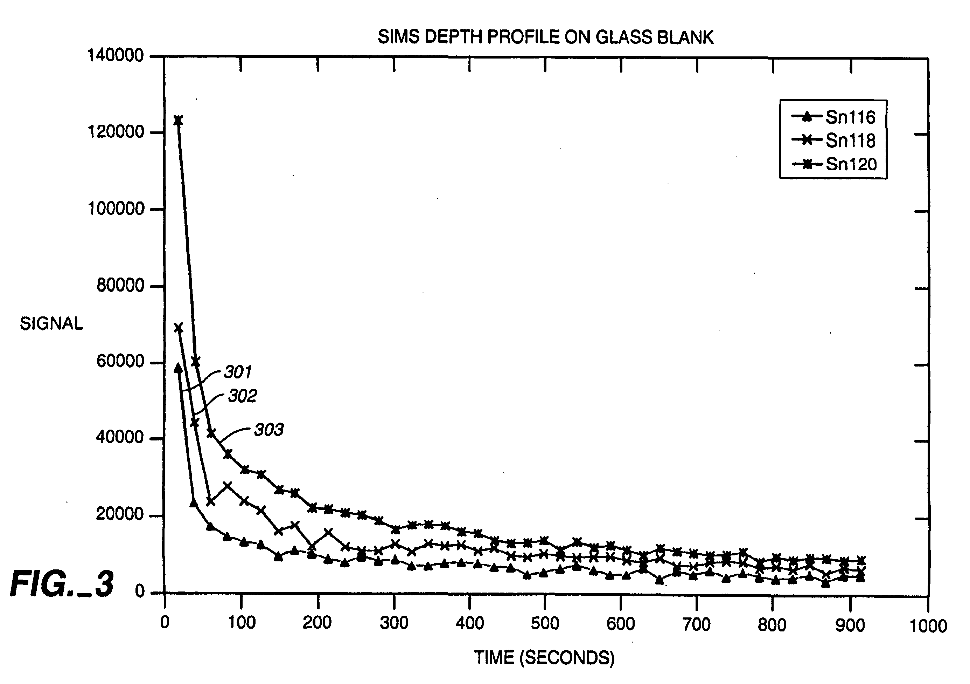

Figure 3 shows a secondary ion mass spectroscopy analysis on an as-floated glass blank. The Y-axis shows the ion counts and the X-axis represents the time that the beam was held stationary at the point of incidence, in seconds. By keeping the beam stationary, a hole is drilled into the substrate, so that the analysis reveals the tin content as a function of depth. An examination time of 900 seconds yielded a hole depth of approximately 900 Å (90 nm). If a linear drilling rate is assumed, the signal versus time plot is equivalent to a signal versus depth (in Angstroms (nanometers) profile. Curves 301, 302, 303 show the signal for three different isotopes of tin, specifically Sn 116, Sn 118 and Sn 120, respectively. As can be seen from Figure 3 virtually all of the tin resides in the first 100 Å (10 nm) or less of the surface. It should be noted that even the amounts of tin present near the surface are not significant. Nevertheless, the signal drops off extremely rapidly indicating that the relatively small tin content is primarily in the first hundred Angstroms (first 10 nm) or so near the surface.

Based upon the discovery of the lack of significant tin diffused into as-floated glass and the high quality of the surface, the present invention comprises the use of as-floated glass as the substrate for magnetic recording media. The substrate may be formed in a process that does not utilize expensive grinding, lapping or polishing steps. Alternatively, these steps may be used in a very limited fashion to curtail costs.

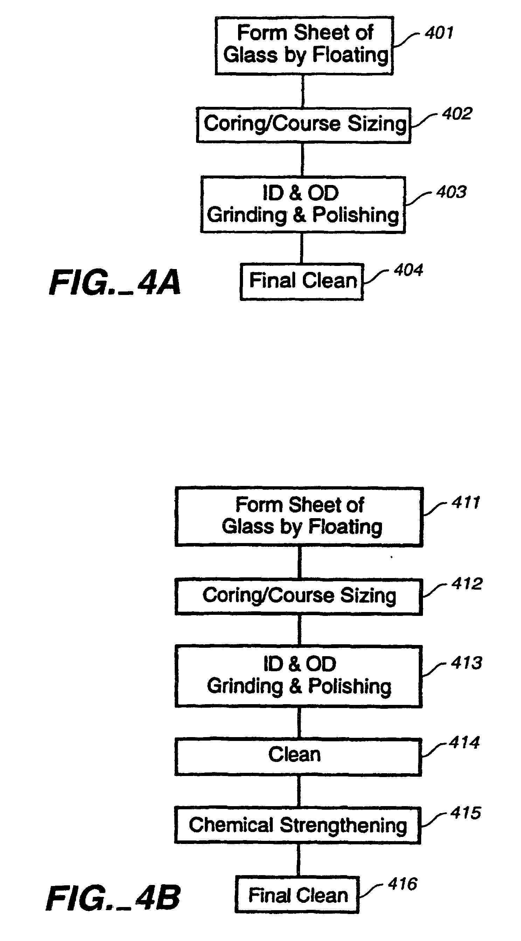

Referring to Figure 4A, a flow diagram of an exemplary process according to the present invention is shown. In step 401 a sheet of glass is formed by floating. In this step, molten glass is floated on molten tin. The molten glass is cooled to form a sheet of glass. In this embodiment of the present invention, the molten glass is floated such that its thickness is substantially equal to the desired final substrate thickness. In step 402 the glass sheet is sectioned into smaller pieces, and then cored into cylindrical shaped blanks having an inner diameter opening. After this step, the ID and OD have been coarsely sized.

Next, in step 403 inner diameter and outer diameter grinding is performed to provide a desired chamfer and to precisely size the ID and OD of the substrate. Because the blank is at or near its desired thickness in the embodiments of the present invention, the chamfer can be put on without extensive adjustment to account for subsequent extensive grinding, lapping and/or polishing operations. Because the amount of material removed after chamfering is not extensive, there is less affect on chamfer length due to side to side removal non-uniformity, thereby improving chamfer length uniformity. Next, an edge polishing may be performed to ensure that the edges are smooth. Then, in step 404 a final clean is performed.

By comparing the process described in relation to Figure 4A to that described in relation to Figure 1, it can be seen that the process of the present invention is considerably less complex. Therefore, embodiments of the present invention, including that shown in Figure 4A, provide the ability to fabricate glass substrates at a substantially reduced cost. For example, approximately one half to two thirds or more of the cost of fabricating a substrate may be eliminated with the present invention.

A further embodiment of the present invention is shown in Figure 4B. In the embodiment shown in Figure 4B, a sheet of glass is formed by floating in step 411, and then is sectioned and cored in step 412. ID and OD grinding and polishing is performed in step 413. Next, in step 414 a clean is performed. Then in step 415 a chemical strengthening step is performed to prevent propagation of micro-cracks. Next, in step 416 a final clean is performed. Again, the process of Figure 4B is considerably less complex and costly than the prior art process of Figure 1.

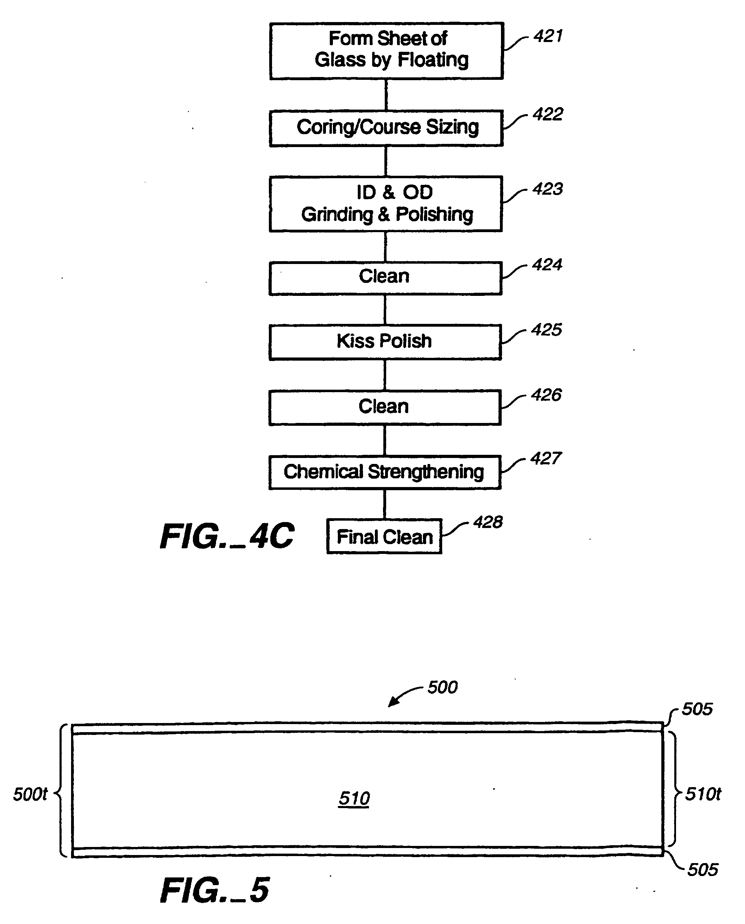

Figure 4C shows a further embodiment of the present invention. A sheet of glass is formed by floating in step 421, sectioned and cored in step 422. ID and OD grinding and polishing is performed in step 423. Next, in step 424 a clean is performed on the blank.

Referring briefly to Figure 5, an illustration of blank 500 having a thickness 500t is shown (the ID opening is not shown in Figure 5). Returning to Figure 4C, after step 424 the blank may be polished in step 425. Because the surface of the as-floated glass is high quality and contains minimal tin, even in embodiments having one or more polish steps it is typically not necessary to perform extensive polishing. In fact, step 404 may be referred to as a 'kiss' polish to indicate the non-extensive nature of this step. Referring to Figure 5, a very thin layer 505 is removed in embodiments where the polishing process is performed. In general, where polishing is performed, a single polishing step may be used which will typically be similar to the final polishing step used in the prior art process.

Following the polish step 425, a cleaning step 426 may be performed followed by chemical strengthening step 427. Finally, in step 428 a cleaning is performed to complete processing of the substrate.

As described earlier, glass substrates have proven to be considerably expensive for use in recording media. Much of the expense is in the grinding, lapping and polishing steps. These steps are costly due to a variety of factors, including a cost of capital equipment, material usage, labor, and costs associated with increased through-put time. In embodiments where no grinding, lapping, or polishing steps are performed, these steps and therefore their costs are essentially eliminated. In the prior art, the steps combined typically remove at least 20% of the blank thickness and often 50% or more of the blank thickness. In contrast, in the present invention it is desirable to remove no more than 10% of the thickness of the blank. For a 1 mm substrate, the initial blank thickness would therefore need be no more than approximately 1.1 mm, meaning that about 100 µ or less of material is to be removed. Typically, less than 5% of the thickness of the blank is removed and more preferably 2.5% or less of the thickness of the blank in the present invention. In many cases, the thickness of the blank removed corresponds to only that removed in prior art final polishing steps which is typically less than about 1% of the thickness of the blank. By cutting down the extent of the grinding, lapping and polishing the cost of producing the blank can be significantly reduced.

Viewed alternatively, the present invention comprises performing only that amount of grinding, lapping or polishing necessary to fine tune the surface characteristics. For example, a minor amount of grinding or lapping may be performed to improve large scale flatness or micro-waviness. More typically, only a very fine polish is desirable to provide for a very fine surface in terms of removal of asperities, scratches, embedded particles or other minor defects, contaminants, and to provide a good degree of smoothness (i.e. low Ra). It will be appreciated that "removal" of a defect as used herein does not necessarily mean complete removal of all such defects, but rather removal to the level necessary for the media to be formed on the substrate.

Although the amount of tin on or in the first fraction of the substrate surface is small, this minor amount of tin will be removed by even a very light polishing. Alternatively, in embodiments in which no polish is performed, it may be desirable to design the cleaning process such that the tin is removed from the substrate surface by chemical action.

It will be appreciated that the process flows in Figures 4A-4C is merely exemplary, and some steps may be omitted if desired, or the steps may be performed in an order different from that shown in Figures 4A-4C. Additional steps, such as additional cleaning grinding, lapping or polishing steps or other steps, such as a thermal treatment step, may be added to any of the process flows of Figure 4A-4C. However, by limiting the presence of grinding, lapping and/or polishing steps or the extent of any such steps if present the cost may be greatly reduced. Moreover, as is known polishing tends to produce roll-off (also referred to as "dub-off") whereby the surface of the disk rolls off by several hundred angstroms prior to the beginning of the desired chamfer. By eliminating or greatly reducing the amount of polishing, the roll-off due to polishing is correspondingly eliminated or reduced.

It will be appreciated that in some instances a device utilizing a magnetic recording disk may have less rigorous requirements than the most demanding application. For example, devices with removable cartridges comprising one or more disks often are at lower densities than the most advanced non-cartridge drive. For use in these drives, as-floated glass is particularly suitable because a given quality of as-floated glass requires less processing than is required of the same material for use in the most advanced drive. Therefore, the present invention may find particular applicability in such drives.

While the invention has been described with respect to specific embodiments thereof, those skilled in the art will recognize that changes can be made in form and detail without departing from the spirit and scope of the invention. Although specific embodiments have been shown, aspects of any embodiment can be used in others. Several embodiments have been described herein, but other embodiments having changes in form and detail will be readily apparent to one of skill in the art upon reading the present disclosure.

## Claims

1. A method for making a magnetic recording disk comprising:
floating molten glass on a molten material;
solidifying said molten glass to form a glass sheet;
forming at least one blank from said glass sheet, said blank having a thickness, wherein said step of forming at least one blank comprises sectioning a portion of said sheet of glass and coring the sectioned piece;
performing one or more operations to form a substrate, wherein a total of 10% or less of said thickness of said blank is removed while performing said one or more operations to form said substrate and wherein the one or more operations comprise fine polishing the substrate; and
depositing a magnetic layer above said substrate.

2. The method as described in Claim 1 wherein said one or more operations remove 5% or less of said thickness of said blank.

3. The method as described in Claim 1 wherein said one or more operations remove 2.5% or less of said thickness of said blank.

4. The method as described in Claim 1 wherein said one or more operations remove 1% or less of said thickness of said blank.

5. The method as described in any one of the preceding claims wherein said method further comprises the steps of chamfering one or both of an outside diameter edge of said blank and an inside diameter edge of said blank, and polishing one or both of said outside diameter edge and said inside diameter edge of said blank.

6. The method as described in Claim 1, wherein the one or more operations further comprise cleaning said substrate after the fine polishing of said substrate.

7. The method as described in Claim 1, wherein said substrate has a thickness of approximately 1 millimeter.

8. The method as described in Claim 1, wherein said fine polishing operation is effective to achieve one or more of:
removal of embedded particles;
removal of asperities;
removal of scratches;
removal of chemical contaminants on or near the surface;
lowering the roughness of said surface; and
any combination of the foregoing.

## Patentansprüche

1. Verfahren zur Herstellung einer magnetischen Aufzeichnungsdiskette bzw. - scheibe, umfassend:
Floaten bzw. Aufschwimmen von geschmolzenem Glas auf einem geschmolzenen Material;
Verfestigen des geschmolzenen Glases, um ein Glasblatt auszubilden;
Ausbilden wenigstens eines Zuschnitts bzw. Rohlings aus dem Glasblatt, wobei der Zuschnitt eine Dicke aufweist, worin der Schritt eines Ausbildens von wenigstens einem Zuschnitt ein Unterteilen eines Teils bzw. Abschnitts des Glasblatts und ein Entmischen bzw. Entkernen des unterteilten Stücks umfaßt;
Durchführen von einer oder mehrerer Operation(en), um ein Substrat auszubilden, worin insgesamt 10 % oder weniger der Dicke des Zuschnitts entfernt wird, während die eine oder mehreren Operation(en) ausgeführt werden, um das Substrat zu bilden, und worin die eine oder mehreren Operation(en) ein Feinpolieren des Substrats umfassen; und
Abscheiden einer magnetischen Schicht über dem Substrat.

2. Verfahren nach Anspruch 1, worin die eine oder mehreren Operation(en) 5 % oder weniger der Dicke des Zuschnitts entfernt(en).

3. Verfahren nach Anspruch 1, worin die eine oder mehrere Operation(en) 2,5 % oder weniger der Dicke des Zuschnitts entfernt(en).

4. Verfahren nach Anspruch 1, worin die eine oder mehreren Operation(en) 1 % oder weniger der Dicke des Zuschnitts entfernt(en).

5. Verfahren nach einem der vorhergehenden Ansprüche, worin das Verfahren weiters die Schritte eines Anschrägens von einer oder beiden einer Außenseitendurchmesserkante des Zuschnitts und einer Innenseitendurchmesserkante des Zuschnitts und eines Polierens der einen oder beiden der Außenseitendurchmesserkante und Innendurchmesserkante des Zuschnitts umfaßt.

6. Verfahren nach Anspruch 1, worin die eine oder mehreren Operation(en) weiters ein Reinigen des Substrats nach dem Feinpolieren des Substrats umfaßt (umfassen).

7. Verfahren nach Anspruch 1, worin das Substrat eine Dicke von etwa 1 Millimeter aufweist.

8. Verfahren nach Anspruch 1, worin die Feinpolituroperation wirksam ist, um eines oder mehrere zu erreichen aus:
Entfernen von eingebetteten Teilchen;
Entfernen von Oberflächenunebenheiten;
Entfernen von Kratzern;
Entfernen von chemischen Verunreinigungen an oder nahe der Oberfläche;
Absenken der Rauheit der Oberfläche; und
jede Kombination der Vorhergehenden.

## Revendications

1. Procédé pour réaliser un disque d'enregistrement magnétique comprenant :
le flottage d'un verre fondu sur un matériau fondu ;
la solidification dudit verre fondu pour former une feuille de verre ;
la formation d'au moins une ébauche à partir de ladite feuille de verre, ladite ébauche ayant une épaisseur, ladite étape de formation d'au moins une ébauche comprenant la découpe d'une partie de ladite feuille de verre et le poinçonnage de la pièce sectionnée ;
la mise en oeuvre d'une ou plusieurs opérations de formation d'un substrat, un total d'au plus 10% de ladite épaisseur de ladite ébauche étant retiré pendant la mise en oeuvre de ladite ou desdites opérations de formation dudit substrat et la ou les opération(s) comprennent un polissage fin du substrat ; et
le dépôt d'une couche magnétique sur ledit substrat.

2. Procédé tel que décrit à la revendication 1, dans lequel ladite ou lesdites opérations retirent au plus 5% de ladite épaisseur de ladite ébauche.

3. Procédé tel que décrit à la revendication 1, dans lequel ladite ou lesdites opérations retirent au plus 2,5% de ladite épaisseur de ladite ébauche.

4. Procédé tel que décrit à la revendication 1, dans lequel ladite ou lesdites opérations retirent au plus 1% de ladite épaisseur de ladite ébauche.

5. Procédé tel que décrit à l'une quelconque des revendications précédentes, ledit procédé comprenant en outre les étapes de chanfreinage du rebord de diamètre extérieur de ladite ébauche et/ou du rebord de diamètre intérieur de ladite ébauche, et le polissage du rebord de diamètre extérieur de ladite ébauche et/ou du rebord de diamètre intérieur de ladite ébauche.

6. Procédé tel que décrit à la revendication 1, dans lequel la ou les opérations comprennent en outre le nettoyage dudit substrat après le polissage fin dudit substrat.

7. Procédé tel que décrit à la revendication 1, dans lequel ledit substrat a une épaisseur d'environ 1 millimètre.

8. Procédé tel que décrit à la revendication 1, dans lequel ladite opération de polissage fin est efficace pour réaliser une ou plusieurs des opérations suivantes :
retrait des particules noyées ;
retrait des aspérités ;
retrait des rayures ;
retrait des contaminants chimiques sur la surface ou au voisinage de celle-ci ;
diminution de la rugosité de ladite surface ; et
l'une quelconque de leurs combinaisons.
